# EUROPEAN PATENT APPLICATION

(11) **EP 1 293 361 A2**
(43) Date of publication of application: **19.03.2003**
(21) Application number: 02078470.8
(22) Date of filing: 22.08.2002
(51) Int. Cl.: B60B 7/20, G09F 21/04

(54) **Adjustable counterweight for non-rotating hubcap**

(30) Priority: 13.09.2001 NL 1018623
(71) Applicant: Nooijen, Paul Johan Willem Maria, 5340 AG Oss (NL)
(72) Inventor: Nooijen, Paul Johan Willem Maria, 5340 AG Oss (NL)

(57) **Abstract**

The invention relates to an adjustable counterweight for a non-rotating hubcap, with the characteristics, that the adjustable counterweight can be moved in relation to the display disk. A second object is to enable correcting the hubcap for the friction of the bearing or an unbalance created by an asymmetrical signage. In order to be able to realize these two objects in an easy manner, it is important to take two basic positions that can be set easily. When the display disk is mounted on the left side of the vehicle, the adjustable counterweight takes basic position 1 and when the display disk is mounted on the right side, the adjustable counterweight is moved according (5) to basic position 2.

## Description

The invention relates to an adjustable counterweight for a non-rotating hubcap.

Such a counterweight is known from patent US-5,659,989: "Wheel cover". Wherein the counterweight is mounted irremovably on a display disk.

A disadvantage of a fixed mounting of the stated counterweight is that there can be no correction for the friction in the bearing.

It is the object of this invention to supply a counterweight that overcomes the stated disadvantage.

The above-mentioned object will be realized through an adjustable counterweight for a hubcap with the characteristic that the adjustable counterweight can be moved in relation to the display disk. It is also the object of this invention to be able to correct the hubcap for friction of the bearing or an unbalance as a result of an asymmetrical signage. In order to be able to realize these two objects, it is possible to take two basic positions that are easily set.

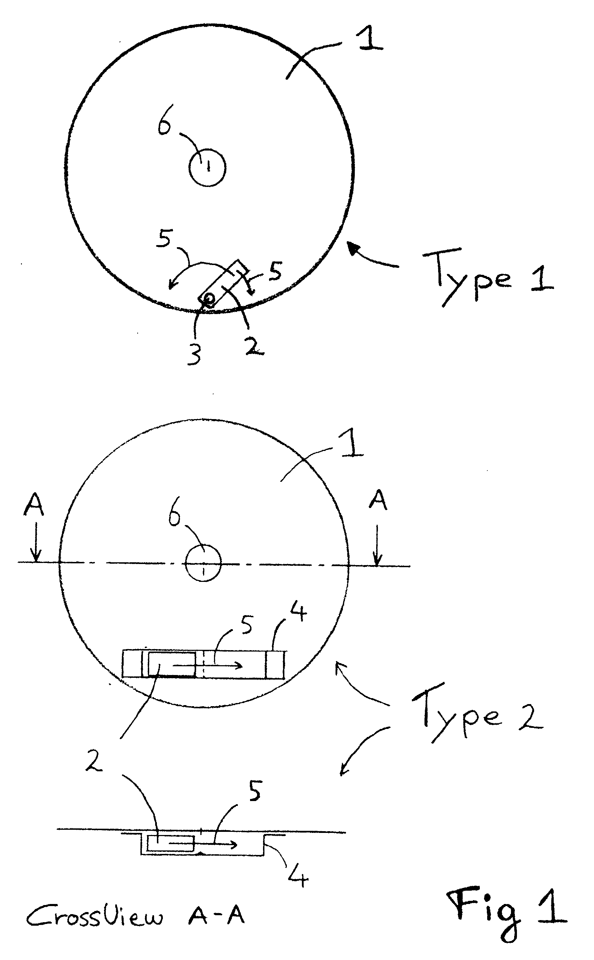

Other features and advantages of the stated adjustable counterweight according to the invention, will appear more clearly from the appended drawing wherein FIG 1 shows a schematic rear view type 1 and a rear view plus cross-section type 2 of said display disk 1. On the display disk 1, a connecting member 6 is indicated through which the display disk 1, through the connecting members 6 and consequently the bearing and rear frame, could be mounted onto a wheel. This has not explicitly been drawn. On the display disk 1 an adjustable counterweight has been mounted through a bold 3 or a housing construction 4. The adjustable counterweight can be moved according to the vectors 5. When the display disk 1 is mounted onto the left side of the vehicle, the adjustable counterweight takes basic position 1 and when the display disk is mounted onto the right side of the vehicle, the adjustable counterweight is moved through vectors 5 to basic position 2. Basic positions are not drawn.

## Claims

1. The invention relates to an adjustable counterweight (2) for a non-rotating hubcap (1), with the characteristics, that the counterweight is adjustable.

2. Adjustable counterweight (2) of claim 1, with the characteristics, that said adjustable counterweight (2) can easily be moved to two basic positions.

3. Adjustable counterweight (2) of claim 1, with the characteristics, that said adjustable counterweight (2) can easily be moved to multiple basic positions.

4. Adjustable counterweight (2) of claim 1, **with the characteristics,** that said adjustable counterweight (2) rotates on a bold (3) as indicated in FIG 1 (type 1)

5. Adjustable counter weight (2) of claim 1, **with the characteristics,** that said adjustable counter weight can move to certain positions inside a housing construction (4) FIG 1 (type 2).

6. Adjustable counterweight (2) of claim 1, **with the characteristics,** that the weight of said adjustable counter weight (2) can be adjusted.
